# EUROPEAN PATENT SPECIFICATION

(11) **EP 3 625 282 B1**
(45) Date of publication and mention of the grant of the patent: **02.03.2022**
(21) Application number: 18722634.5
(22) Date of filing: 15.05.2018
(51) Int. Cl.: C08G 59/18, C09D 163/00

(54) **COMPOSITIONS**
ZUSAMMENSETZUNGEN
COMPOSITIONS

(30) Priority: 16.05.2017 EP 17171410
(43) Date of publication of application: 25.03.2020
(73) Proprietor: Jotun A/S, 3202 Sandefjord (NO)
(72) Inventor: FARSTAD, Vivian Beate, 3202 Sandefjord (NO); JAKOBSEN, Martin Gjerde, 3202 Sandefjord (NO); AKOGYERAM, Samuel, 3202 Sandefjord (NO)
(74) Representative: Dehns
(86) International application number: PCT/EP2018/062592
(87) International publication number: WO 2018/210861

(56) References cited:
- WO-A1-2010/099387
- GB-A- 909 313
- JP-A- H04 288 321
- JP-A- 2007 197 702
- US-A- 3 792 018

## Description

This invention relates to a new amine-epoxy curing agent for use in curing epoxy coatings. In particular, the invention relates to a curing agent based on the reaction product of certain amines and certain aliphatic epoxide compounds which can then be used to cure epoxy resins. The resulting cured resins have excellent flexibility and impact toughness.

### Background of Invention

The coating of steel with coatings to prevent corrosion is well known. In particular, epoxy coatings are a familiar type of coating. Epoxy coatings are used mainly as part of an anti-corrosive coating system on steel substrates due to outstanding corrosion and chemical resistance. Epoxy coating compositions are typically two-component products consisting of an epoxy resin component and a curing agent.

One major drawback of epoxy coatings is the brittleness of the epoxy paint film. Brittle epoxy paint films are prone to crack formation which leads to reduced protection of a steel substrate as the cracks will allow water, oxygen and dissolved salts to reach the substrate.

Polyamine adducts are widely used as curing agents for epoxy resins and can be obtained by reacting an aliphatic amine curing agent with a small amount of epoxy resin. This gives a high molecular weight polyamine curing agent with low vapour pressure that produces cured epoxy coatings, with more practical mixing ratios and less formation of amine blush than the simple aliphatic amines.

The present inventors seek to incorporate flexible binder segments into the cured epoxy matrix via a flexible epoxy-amine adduct.

To date, the commercially available "flexible" curing agents, for example amine functionalized compounds containing elastomeric segments, are slow curing agents for epoxy coatings, and do not give the desired improvement of flexibility in coating formulations. Curing agents described as "flexible" from known suppliers such as Cardolite (Lite 3117 and GX-3006) and Air Products (Ancamine 2739) have also been tested in our laboratory and do not improve impact resistance. Other flexible hardeners such as Jeffamine T-3000 and T-5000 from Huntsman do improve flexibility of an epoxy resin. A drawback however, is their slow curing tendencies at lower temperature and ambient condition, giving a non-fully cured as well as tacky film after 24 hours. This is considered to be commercially unaccepted for the coating industry.

The present inventors now propose to cure a conventional epoxy resin such as a bisphenol-A epoxy resin with a flexible curing agent which is itself formed from an adduct of a flexible epoxy reactant and a diamine. This way, the formulator has much more freedom to formulate an epoxy coating. Moreover using this flexible hardener ensures that the cured thermoset epoxy matrix consists mainly of the rigid epoxy resin units that give the anticorrosive protection. Thus, the cured resins of the invention have improved flexibility leading to better toughness and impact resistance without impacting on the anticorrosive performance.

Some flexible adducts are known. EP-A-0566822 describes a flexible curing agent which is an adduct of a primary and/or a secondary amine with an ether. The curing agents include at least three disulphide units in their backbone.

WO2012/040094 describes a two-part epoxy composition which includes as a first part, an epoxy resin component comprising of a novolac epoxy resin, a bisphenol F epoxy resin or a mixture thereof, and as a second part, a curing agent component comprising an adduct of an amine and an epoxy resin. The compositions are particularly suitable for potting or sealing electrical devices used in hazardous locations. Exemplified curing agents include the ANCAMINE series from Air Products which are based on ethylene diamine and bisphenol A adducts. The use of only an aromatic epoxy reactant in the amine-epoxy adduct however does not provide the flexibility which is desired. This is due to the aromatic groups in the repeating units of the binder back-bone, not allowing free and flexible rotation around the covalent bonds at relevant service condition for a protective coating.

JPH04288321A relates to curing agents for epoxy resins. The curing agents disclosed therein comprise the reaction product of an aliphatic polyamine and a glycidyl ether substituted ricinoleic acid triglyceride.

We now propose a curing agent which can cure epoxy resins better than commercially available flexible amine hardeners, has good impact toughness, and flexibility whilst still retaining anti-corrosive properties in the cured coating.

### Summary of Invention

Thus, viewed from one aspect, the invention provides a method for preparing a curing agent comprising a step of reacting (I) an aliphatic polyglycidyl ether of a triol or higher polyol such as an aliphatic polyglycidyl ether of glycerine; with a diamine (II);
wherein said diamine (II) comprises a first primary or secondary amine group, and a second primary or secondary amine group, linked together by a linker;
wherein said linker is an aliphatic hydrocarbyl group containing 4-20 carbon atoms and optionally containing 1 to 3 oxygen atoms wherein the N atoms of the first and second amine groups are separated by at least 4 atoms; and
wherein the hydroxyl groups of said triol or higher polyol residue form ethers in said aliphatic polyglycidyl ether component (I).

Viewed from another aspect the invention provides a curing agent comprising the reaction product of (I) an aliphatic polyglycidyl ether of a triol or higher polyol, such as an aliphatic polyglycidyl ether of glycerine; with a diamine (II);
wherein said diamine (II) comprises a first primary or secondary amine group, and a second primary or secondary amine group, linked together by a linker;
wherein said linker is an aliphatic hydrocarbyl group containing 4-20 carbon atoms and optionally containing 1 to 3 oxygen atoms wherein the N atoms of the first and second amine groups are separated by at least 4 atoms; and
wherein the hydroxyl groups of said triol or higher polyol residue form ethers in said aliphatic polyglycidyl ether component (I).

Viewed from another aspect the invention provides a kit of parts comprising:
(i) a first part comprising a curing agent as herein before defined; and
(ii) a second part comprising an epoxy resin.

Viewed from another aspect the invention provides a process of curing an epoxy resin comprising the steps of combining an epoxy resin with a curing agent as hereinbefore defined and allowing the combination to cure.

Viewed from another aspect the invention provides a coating composition comprising a curing agent as herein defined and an epoxy resin.

Viewed from another aspect the invention provides a cured epoxy resin obtainable by the process as hereinbefore defined.

### Definitions

As used herein the term "primary amine" means the unit -NH₂. As used herein the term "secondary amine" means the unit -NHR₂ where R₂ is a hydrocarbyl group such as a C1-6 alkyl group.

The N atoms of the first and second amine groups are separated by at least 4 atoms in the diamine (not counting the N atoms), such as NH₂-C-C-C-C-NH₂. This ensures good storage stability, and curing speed as well as and good film appearance in the final product.

A glycidyl ether unit is of formula:

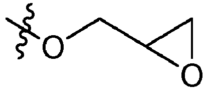

By an aliphatic polyglycidyl ether of a triol is meant a compound comprising two or more glycidyl ether functionalities and a triol residue. The glycidyl ether groups do not need to bind to the oxygen atoms that formed the triol and the glycidyl ether function does not need to utilise the oxygen of the triol. It is required however, that the hydroxyl groups of the triol residue form ethers in the aliphatic polyglycidyl ether of a triol and not esters. The aliphatic polyglycidyl ether of a triol compounds are not glycerides. The aliphatic polyglycidyl ether of a triol or higher polyol compounds of the invention are preferably free of carbonyl groups or any carboxyl groups.

By an aliphatic triglycidyl ether of glycerine is meant a compound comprising three glycidyl ether functionalities and a glycerine residue. The glycidyl ether groups do not need to bind to the oxygen atoms that formed the glycerine and the glycidyl ether function does not need to utilise the oxygen of the glycerine. It is required however that the hydroxyl groups of the glycerine form ethers not esters. The compounds are not triglycerides.

The terms "curing agent", "flexible curing agent" or "amine adduct" used herein mean the reaction product formed between the glycidyl ether component (I) and the amine (II).

The term "reacting" in the context of forming the curing agent means reaction of the amine (II) with the epoxide (I) via an epoxide ring opening reaction.

The term higher polyol implies a polyol with 4 or more hydroxyl groups, such as 4 or 5 hydroxl groups.

### Detailed description of the invention

This invention relates to a curing agent for an epoxy resin and the use of that curing agent to cure an epoxy resin. The curing agent is itself formed from the reaction of an amine and a glycidyl ether component (I). It is therefore the reaction product formed between the glycidyl ether (I) and the amine (II) that forms the curing agent.

### Epoxide component (I)

The epoxide component of the curing agent adduct is based on an aliphatic polyglycidyl ether of a triol or higher polyol. In a particular embodiment, the epoxide component of the curing agent adduct is based on an aliphatic polyglycidyl ether of a triol such as glycerine. The epoxide component (I) contains 2 or more epoxide units, preferably 3 or more epoxide units, hence the epoxides are polyglycidyl ethers.

Suitable epoxide compounds are of formula (X): 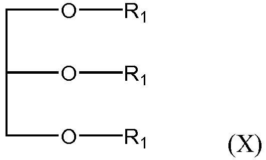 wherein each R₁ consists of an optionally unsaturated alkyl group which is optionally interrupted by one or more -O- groups wherein at least two R₁ groups also carry a glycidyl ether functionality. The group R₁ ideally has up to 50 carbon atoms, such as 5 to 50 carbon atoms. In one embodiment R₁ may comprise up to 25 carbon atoms, e.g. 5 to 25 carbon atoms. Ideally, the Mw of the epoxy component (I) is in the range of 500 to 5000 g/mol.

Suitable epoxide compounds are also of formula (XI): 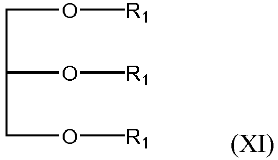 wherein each R₁ consists of an optionally unsaturated alkyl group which is optionally interrupted by one or more -O- groups, wherein each R₁ also carries a glycidyl ether functionality.

Suitable epoxide compounds are also of formula (XII): 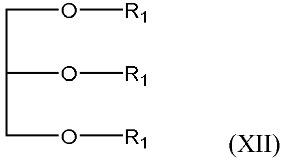 wherein each R₁ consists of an alkyl group which is interrupted by one or more -O- groups, wherein each R₁ also carries a glycidyl ether functionality.

In a preferred embodiment R₁ is a polyethylene glycol chain or polypropylene glycol chain functionalised to carry a glycidyl ether. R₁ may therefore contain a repeating unit of formula (-CH₂-CH₂-O-), (-CH₂-CH(CH₃)-O-) or (-CH₂-CH₂-CH₂-O-). There may be 2 to 10 repeating units.

In a preferred embodiment, formula (X) represents a propoxylated glycerine preferably with an approximate Mw of 1500 to 3000 such as 2000 to 3000 having the general formula (Xb) below:

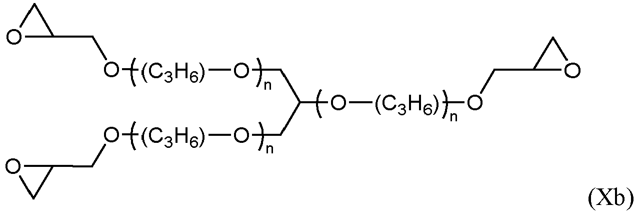

### Propoxylated glycerine triglycidyl ether

The value of n is preferably independently selected such that the compound Xb has a Mw of 1500 to 3000 g/mol, such as 2000 to 3000 g/mol.

The epoxy compound (X) is preferably liquid at room temperature, i.e. 23°C.

Particular examples of the epoxy component include aliphatic polyol modified epoxy resin, etc. Further, particular examples of commercially available flexible epoxy resins (A) include aliphatic polyol polyglycidyl ether (ERISYS GE-36 (from CVC/Emerald Performance materials).

In a particularly preferred embodiment the epoxy component is ERISYS^{™} GE-36. ERISYS^{™} GE-36 is an epoxy resin in which the predominant component is an epoxy resin of formula (Xb).

The epoxide of formula (X) may be combined with another epoxide component such as an epoxide of formula (V) which comprises one glycidyl ether unit per molecule. The epoxide component (V) is preferably free of any phenol groups and is therefore aliphatic in nature.

The epoxide resin of formula (V) is 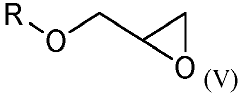 wherein R is a saturated or unsaturated C6-C30 hydrocarbyl group, preferably a C8-C24 aliphatic hydrocarbyl group, especially a C10-C20 aliphatic hydrocarbyl or C10-C18 aliphatic hydrocarbyl group, C10-C16 aliphatic group, especially a C12-C14 aliphatic group, which may contain one or more ether linkages. In each case the R group may be saturated or unsaturated but is preferably saturated. In each case the R group may contain an ether linker, but R is preferably an aliphatic hydrocarbyl. R is preferably alkyl or alkenyl. In one embodiment R is a C6-10 aryl group.

In each case the R group is preferably a linear unsubstituted group. Particularly suitable epoxide resins are those in which R is a linear unsaturated C8 to C30 alkenyl or alkyl group, preferably a C10-C16 alkenyl or alkyl such as a C12-C14 alkenyl or alkyl group. The R group is thus ideally based on a long chain aliphatic alcohol.

It is possible for a mixture of epoxide resins to be used in component (I), such as an epoxide resin according to formula (V) in combination with an epoxide resin according to formula (X) such as of formula Xb.

Optional combinations include ERISYS^{™} GE-36, and a glycidyl ester of formula (V) in which R is a C10-C16 aliphatic group, especially a C12-C14 aliphatic group.

If a blend of compounds of formula (X) and (V) is used it is preferred if the compound of formula (X) is in excess. Thus the weight ratio may be 60:40 to 98:2 wt%, such as 70:30 to 95:5 wt%. Typically therefore the compound of formula (V) forms 1 to 20 wt% of the epoxide component (I).

It is however, preferred if a single epoxide resin, e.g. of formula (X) is employed.

In a further embodiment, the epoxide component (I) can also comprise small amount of a liquid bisphenol epoxy resin, such as up to 30 wt%, e.g. up to 20 wt% liquid bisphenol epoxy resin relative to the total weight of epoxy containing compounds within the curing agent, such as up to 20 wt%, such as up to 10 wt% of the bisphenol resin. This bisphenol resin is ideally based on bisphenol A, preferably with EEW of 156 - 1000, such as 156 - 300, more preferably EEW 170-210. By liquid is meant at room temperature and pressure (25°C, 1 atm).

### Amine - component (II)

Component (II) comprises a first primary or secondary amine group, and a second primary or secondary amine group, linked together by a linker. The first amine group is preferably a primary amine. The second amine group may be a primary or secondary, and is preferably a primary amine group. The amine component (II) may not contain further amine groups thus triamines and tetraamines etc. are excluded. Amine component (II) is a diamine.

Where the second amine group is a secondary (-NHR2) group, R2 is a C1-C6 hydrocarbyl group, preferably C1-3 alkyl group, especially methyl. It is preferred if the second amino group is a primary amino group.

It is preferred if the diamine (II) is branched or cyclic.

The linker between the two amine groups is an aliphatic C4-C20 hydrocarbyl unit which optionally contains 1 to 3 -O- groups wherein the N atoms of the first and second amine groups are separated by at least 4 atoms, preferably wherein the linker is an aliphatic C4-15 alkyl group. The linker group is free of sulphur atoms. The amine component (II) cannot therefore comprise a mercapto product.

Preferably the linker between the two amine groups is an aliphatic C5-C20 hydrocarbyl unit which optionally contains 1 to 3 -O- groups, such as 1 to 2 -O-groups. Preferably, however, no -O- groups are present.

Preferably the linking unit is a C4-C15 aliphatic group, especially a C4-C10 aliphatic group, and preferably a C4-C8 aliphatic group.

Ideally, the Mw of the amine component (II) is less than 500 g/mol, such as less than 300 g/mol.

In one embodiment the linker is a linear or branched C4-C8 alkyl, C4-8-cycloalkyl or C4-8-alkylcycloalkyl group.

Thus the amine of the invention is preferably of formula (III)

NH₂-L-NHR₂ (III)

wherein R₂ is a H or C1-C6 hydrocarbyl group, preferably C1-3 alkyl group, especially methyl or H;
and L is an aliphatic C4-C20 hydrocarbyl unit which optionally contains 1 to 3 -O- groups. The N atoms of the first and second amine groups are separated by at least 4 atoms.

The linker L is aliphatic and may be cyclic or acyclic. If L is acyclic, L is preferably linear or branched. L is preferably formed from a plurality of -CH₂-, - CH(Me)- or -O- units linked in a chemically meaningful way to form the linker. Ether linkages should not be adjacent (i.e. forming a peroxide) and should preferably be at least two carbon atoms apart from each other if there are more than one ether linker. These may derive therefore from alkylene glycol units, such as ethylene glycol. Preferably, L is formed by combining 4 to 8 groups selected from -CH₂-, - CH(Me)- or -O- units, preferably -CH₂-, or -CH(Me)-.

The linker L may also comprise a ring, such as a cycloaliphatic ring. Preferred rings include cyclohexyl, norbornyl, isophorone rings, especially cyclohexyl. The use of saturated rings is preferred. Such rings may carry one or more, such as 1 to 4, C1-3 alkyl substituents, such as 1 to 2 C1-3 alkyl substituents. It is preferred if amine (II) is saturated and hence free of any double bonds.

The first and second amine groups can bind to any part of the linker L but should not bind to the same carbon atom. There will be a chain of at least 4 atoms, between the N atoms of the amines. That chain is defined as the shortest route between the atoms. Thus, if there is a ring in the chain, the number of atoms should be counted via the short way round the ring (if applicable).

By way of example, in the amine 1,3-bis(aminomethyl) cyclohexane, the groups are joined by the chain "-CH₂CHCH₂CHCH₂-" i.e. 5 atoms. Where there is more than one set of contiguous atoms between the first and second amine groups, the shortest set of contiguous atoms is to be considered the "chain", in this case the C5 unit.

Suitable amines include, 1,4-butane diamine, 1,6- hexamethylene diamine, 2,2,4-trimethyl hexamethylene diamine, , dimethyl aminopropyl amine, 2-methyl-1,5-pentane diamine, 1,2-bis(2-aminoethoxy)ethane) (trade name JEFFAMINE EDR 148 ^{®}), m-xylene diamine, 1,3-bis-(aminomethyl) cyclohexylamine, 1,4-bis(aminomethyl)-cyclohexane (1,4-BAC) isophorone diamine, norbornanediamine (NBDA), 4,4'-methylene bis cyclohexylamine.

Particularly preferred amines for use in this embodiment are; 2-methyl-1,5-pentane-diamine and 1,3-bis(aminomethyl)-cyclohexane (1,3-BAC).

### Curing agent

The curing agent is prepared by combining the epoxide component(s) (I) and amine components (II), normally at an elevated temperature such as a temperature of between room temperature and 100°C, especially at a temperature of between 30 °C and 90 °C. A solvent may be used. Suitable solvents are alcohols like methanol, ethanol, isopropanol, n-butanol, isobutanol, sec-butanol, tert-butanol, propylene glycol, benzyl alcohol, Dowanol PMA, Dowanol PnP. Mixtures of these solvents with other solvents usually used in paint such as xylene, butylacetate, Solvesso, ketones is possible. Especially suitable solvent is ethanol. The use of solvents and especially ethanol is envisaged to improve storage stability.

The reaction will typically be agitated, e.g. with stirring. The epoxy is preferably added gradually to the amine component, rather than the other way around, to minimise unwanted cross-linking reactions between epoxides. Once reaction is complete the product may optionally be subjected to vacuum to remove any volatile amine. The adduct is therefore formed by an addition reaction between the amines of the component (II) and the epoxides of component (I).

The stoichiometry between the epoxy component (I) and the amine (II) will depend on the number of epoxide units within the component (I) and the number of primary and secondary amine units within the amine (II). Preferably the molar ratio of -NH₂ and -NH units in the amine to the number of epoxide units in the epoxide is 1:1 or more, such as 1.1:1 or more, preferably ≥1.2:1, such as ≥1.5:1 such as up to 5:1. That is, the amine units are in excess such that the epoxides in the epoxide component are preferably completely consumed. In the case where mixtures of epoxides are used as component (I), and/or where mixtures of amines are used as component (II), the above ratio relates to the sum molar totals of epoxides and primary or secondary amines in the epoxide resin(s) and amine(s), respectively.

In a particularly preferred embodiment the curing agent is prepared by the reaction between Erisys GE-36 and 1,5-diamino-2-methylpentane or Erisys GE-36 and 1,3-BAC. In this embodiment the weight ratio between components (I) and (II) may be in the range of 60:40 to 90:10, such as in the range of 70:30 to 85:15.

In one embodiment however, silane coupling agents or other silane functional compounds may be added to the curing agent. Examples include 3-aminopropyltriethoxysilane (AMEO) and propyltrimethoxysilane.

### Epoxy Resin

The curing agent may then be used to cure a conventional epoxy resin. By using a curing agent based on the adduct defined herein, the resulting cured epoxy resin has better flexibility and impact toughness with moderate effect on curing time.

The curing agent of the invention provides flexibility to pigmented paints (with some resins/curing agent combinations flexibility disappears in pigmented samples). Moreover, the flexibility is retained even after fully curing and thermal aging and paint films are flexible even at higher DFTs.

Manufacturers often claim to have flexibile cured resins however justification is provided on paint films cured for a short period, perhaps no more than a week at ambient temperature. At this stage the coating is not fully cured, and next to no thermal aging has taken place. Hence, after 1 week at r.t. several systems might be perceived as flexible. In contrast, our system remains flexible over longer periods..

The epoxy-resin to be cured is preferably selected from one or more aromatic or non-aromatic epoxy resins, containing more than one epoxy group per molecule, which is placed internally, terminally, or on a cyclic structure. The use of multiple epoxy groups (i.e. at least 2 such groups) ensures that a cross-linked network can form.

It will be appreciated that the curing agent and epoxy resin are shipped apart and mixed shortly before use. Suitable epoxy-based binder systems are believed to include epoxy and modified epoxy resins selected from bisphenol A, bisphenol F, Novolac epoxies, cyclo aliphatic epoxies, glycidyl esters and epoxy functional acrylics or any combinations thereof.

The epoxy resin may have an EEW value of 156 to 1000, preferably less than 600. However, it is particularly preferred if the EEW of the epoxy resin is less than 500 such as 156 to 300, especially 156 to 250, especially 180-200. Ideally, the epoxy with this low level of EEW is a liquid.

Composition ideally have a desirable mixing ratio (e.g. 1:1 to 4:1, such as 3:1 vol solids) between epoxy resin component and curing agent component. Also, it is well known that low Mw (often correlated with low EEW) resins have lower viscosity thus demanding less solvent for formulation. That reduces VOC content.

The use of higher Mw (high EEW) resins is also possible, however, as these might give faster drying, better flexibility and better adhesion to the substrate.

Preferred epoxy resins include bisphenol A based resins, such as 4,4'-isopropylidenediphenol-epichlorohydrin resins, novolac resins, and so on.

Bisphenol A epoxy resins will be known to those in the field, and have the general structure below:

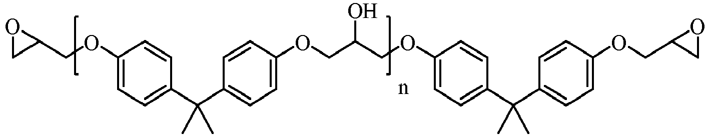

The epoxy resin and curing agent form part of a coating composition that will contain other components in addition to the epoxy resins and curing agent. The epoxy resin component preferably forms 10 to 50 wt% of the coating composition, such as 15 to 30 wt%. The binder component (i.e. the epoxy resin and curing agent components combined) preferably forms 5 to 50 wt% of the composition that makes up the coating composition, such as 15 to 30 wt% of the first composition.

In a preferred embodiment, the curing agent is employed without the use of a separate catalyst to encourage the crosslinking process. The curing adduct of the invention may however be combined with a catalyst such as a tertiary amine catalyst. It will be appreciated that the curing agent adduct can be supplied neat or in a solvent. It is preferred if the epoxy-based binder systems are ambient curing binder systems

The amount of epoxy resin relative to curing agent is based on stoichiometry. Crucial for the calculation is the number of epoxy groups present in the epoxy resin and the number of amine groups present in the curing agent. Typically, the stoichiometric ratio is around 1:1 although the molar ratio of the epoxy resin may exceed that of the curing agent.

The number of "hydrogen equivalents" in relation to the one or more curing agents is the sum of the contribution from each of the one or more curing agents. The contribution from each of the one or more curing agents to the hydrogen equivalents is defined as grams of the curing agent divided by the hydrogen equivalent weight of the curing agent, where the hydrogen equivalent weight of the curing agent is determined as: grams of the curing agent equivalent to 1 mol of active hydrogen. For adducts with epoxy resins the contribution of the reactants before adductation is used for the determination of the number of "hydrogen equivalents" in the complete epoxy-based binder system.

The number of "epoxy equivalents" in relation to the one or more epoxy resins is the sum of the contribution from each of the one or more epoxy resins. The contribution from each of the one or more epoxy resins to the epoxy equivalents is defined as grams of the epoxy resin divided by the epoxy equivalent weight of the epoxy resin, where the epoxy equivalent weight of the epoxy resin is determined as: grams of the epoxy resin equivalent to 1 mol of epoxy groups.

Preferably the ratio between the hydrogen equivalents of the totality of the curing agents and the totality of epoxy equivalents of epoxy resins is in the range of 50: 100 to 140: 100.

Especially preferred epoxy-based binder systems have a ratio between the hydrogen equivalents of the curing agent and the epoxy equivalents of the epoxy resin in the range of 60: 100 to 130: 100 such as 80: 100 to 120: 100, e.g. 90: 100 to 110: 100.

The mixing ratio of the epoxy resin and curing agent is of course governed by the relative amounts of epoxy and active hydrogens present. Ideally, the mixing ratio by volume is 1:1 to 10:1, first to second composition, such as 7:1 to 2:1.

The curing agent composition and epoxy resin are mixed shortly before application to the substrate to form a coating composition. The mixed coating composition ideally has a pot life of at least 30 mins, such as at least 45 mins measured as described in the examples which follow.

### Other coating components

The coating composition may comprise other components in addition to epoxy resin and curing agent. Examples of such components are extender pigments, color pigments, additives, plasticizers, reactive diluents, curing accelerators and catalysts, acrylates and silane coupling agents.

Examples of the extender pigments include barium sulfate, potassium feldspar, baryta powder, silica, calcium carbonate, talc, mica and glass flake, reinforcing agents (e.g. organic or inorganic fibres), microspheres (micronized rubber particles, ceramics, glass, carbon black, hollow or polymer-based spheres). Examples of the color pigments include organic and inorganic pigments such as titanium white, red iron oxide, yellow iron oxide, organic pigments and carbon black.

Reactive diluents preferably comprise an epoxy group. Examples of such reactive diluents include phenyl glycidyl ether, alkyl glycidyl ether (number of carbon atoms in alkyl group: 1 to 13), glycidyl ester of versatic acid (R1 R2 R3 C-COO-Gly, where R1 to R3 are alkyl groups such as C8 to C10 and Gly is a glycidyl group), -olefin epoxide (CH3-(CH2)n-Gly, n=11 to 13), 1,6-hexanediol diglycidyl ether (Gly-O-(CH2)6-O-Gly), neopentyl glycol diglycidyl ether (Gly-O-CH2-C(CH3)2-CH2-O-Gly), trimethylolpropane triglycidyl ether (CH3-CH2-C(CH2-O-Gly)3), and alkylphenyl glycidyl ether (number of carbon atoms in alkyl group: 1 to 20, preferably 1 to 5, e.g., methylphenyl glycidyl ether, ethylphenyl glycideyl ether, propylphenyl glycidyl ether).

Preferable are alkyl glycidyl ether (mono- or difunctional) and alkylphenyl glycidyl ether. Examples of the reactive diluents include "Epodil 759" (alkyl(C12 - C13) glycidyl ether, available from Air Products and Chemicals, Inc., epoxy equivalent: 285), Erisys GE 11 (4-*tert*-butylphenyl glycidyl ether from CVC Thermoset Specialties, epoxy equivalent: 215 - 240) and "Cardolite NX 4764" (alkylphenol glycidyl ether, available from Cardolite Corporation, epoxy equivalent: 400).

Examples of curing accelerators include acrylate monomers and oligomers comprising of ester group and vinyl terminus. Such typical monomers and oligomers are derivatives of acrylic acid, preferably di-, tri- and tetra acrylates. Examples of commercially available products include pentaerythritol acrylate) SR 351 (trimethylopropane triacrylate), SR238 (1,6-hexanedioldiacrylate), 3-methyl 1,5-pentanediol diacrylate and SR306 (Tripropylene glycol diacrylate).

Examples of curing catalyst are tertiary amine e.g. Ancamine K-54 from Evonik.

The total amount of the above-mentioned various components varies depending upon the use purpose and cannot be determined indiscriminately, but they are frequently contained in the total amount of 5 to 75% by weight in the coating composition. The use of these additives is well known in the art.

Examples of additives include epoxy accelerators, surfactants, hydroxyfunctional modifying resins, wetting agents and dispersants, defoaming agents, moisture scavengers, catalysts, stabilizers, corrosion inhibitors, coalescing agents, thixotropic agents and anti-settling agents.

The solvent content of the coating composition is ideally less than 30 wt%. Examples of such solvents include alcohols such as methanol, ethanol, propanol, isopropanol, butanol, isobutanol and benzyl alcohol; aliphatic and aromatic hydrocarbons such as white spirits, cyclohexane, toluene, xylene and naphtha solvents; ketones such as methyl ethyl ketone, acetone, methyl isobutyl ketone, methyl isoamyl ketone, diacetone alcohol and cyclohexanone; ether alcohols such as 2-butoxyethanol, propylene glycol monomethyl ether and butyl diglycol; esters such as methoxyl propyl acetate, n-butyl acetate, Dowanol PMA, propylene glycol and 2-ethoxyethyl acetate and mixtures thereof.

The epoxy coating composition may also comprise a particulate material (e.g. a powder) which increases the anticorrosive properties of the coat. Zinc powder or zinc dust, which is well known to incorporate in epoxy coating to produce a zinc epoxy coating, is in this respect of special interest. Zinc powder or zinc dust can all or partly be replaced by a zinc alloy, e.g. as disclosed in WO 2008/125610. Auxiliary corrosion inhibitors, for example a molybdate, phosphate, tungstate or vanadate, may also be incorporated.

If present, the amount of the anticorrosive constituent is typically 1-65 % by solids volume of the paint.

### Preparation of the Coating Composition

The coating composition may be prepared by any suitable technique that is commonly used within the field of paint production. Thus, the various constituents may be mixed together using a high speed disperser, a ball mill, a pearl mill, a three-roll mill etc.

The coating compositions to be used herein are conveniently prepared by mixing the components. As an example, the epoxy resin and the curing agent component can be mixed by adding the curing agent to the epoxy resin and stirring well until the mixture is homogeneous. The mixture is immediately ready for application, e.g. by spray application.

It will be appreciated that to prevent premature curing, the curing agent and epoxy resin are often supplied in a kit for mixing immediately before application.

### Application of the Coating Composition

The coating composition can be applied to a substrate (in particular a steel structure) by well-known standard application methods like conventional air-spraying or by airless- or airmix-spraying equipment (or alternatively by means of a brush or a roller, in particular when used as a stripe coat).

There is no requirement to wait for the coating layer to cure before applying a top coat or secondary coating layer. It is however, preferred if any top coat is applied after the coating layer has begun curing. The coating layer may also be fully cured before application of an over coat.

The pot life of the coating composition, once mixed is at least 30 mins, such as at least 45 mins measured as described in the examples which follow.

### Film Thickness

The coating is typically applied in a total dry film thickness of 100-200 µm, such as 100-150 µm. The applied film thickness might vary depending on the nature of substrate being coated. For example, thicknesses up to 600 micron may be used for high build coatings and even thicker for intumescent coatings.

The coating of the invention can be overcoated with one or more top coating layers as described.

### Curing

Once a substrate is coated with the coating composition, the coating must be cured. The coating composition may be cured or partly cured before application of any top coat (and then again after application of the top coat). Both coating composition and any top coat may cure simultaneously. Whilst irradiation and heat may be used to encourage curing, the compositions of the invention cure at ambient temperature without further intervention.

An important reason for using a coating composition of the invention is to seal the surface quickly and make a good foundation for the top-coat, without fibre-popping or pinholes from bubbling or pores in the film. Whilst a top coat may be applied to the coating composition before complete curing takes place, it is advantageous if the coating composition cures rapidly. The dry time of the coating composition is preferably less than 8 hrs (T3 at 23°C 50% RH Beck Koller).

Whilst the curing adduct of the invention is primarily of use in curing epoxy resins, the adduct may be suitable as a curing agent for polysiloxane, polyurea and polyurea-polyurethane resins. The curing agent may also be suitable for the production of coatings, adhesives and sealants, casting materials and laminates based on epoxide compounds.

It is envisaged that the adduct of the invention could form part of a powder coating process. The cured coatings based on the claimed adduct may find utility in water ballast tanks or intumescent coating.

The invention will now be described with reference to the following examples.

### Analytical methods

### Determination of curing time

Curing time was determined using a Beck Koller drying time recorder in accordance with ASTM D5895. T3: Surface hardening commenced.

The film quality of the coatings was also inspected after curing at 23°C for 24 hr.

### Determination of dry film thickness (DFT)

Dry film thickness is measured using an elcometer.

### Determination of impact toughness

Impact toughness was determined according to ASTM D2794 using an Erichsen Model 304 with a 2 lb indenter or Elcometer 1615 with a 1 kg indenter. Coated steel panels of 0.8 mm thickness were used. The coated samples were cured 7 days at 20 °C and thereafter 7 days at 60°C (if not otherwise indicated).

### Determination of flexibility by Fixed radii mandrel test

Flexural strain was decided by bending coated steel strips over a mandrell with different radius at room temperature. The procedure as described in NACE RP0394-2002 Appendix H was followed. Coated steel panels of 3 mm thickness were used (Steel strips, Sa 21/2: 3mm thickness x24mm width x250mm length). The coated samples were cured 7 days at 20 °C and thereafter 7 days at 60°C (if not otherwise indicated).

### Salt spray

Anticorrosive properties were tested according to ASTM B117 for 6 months in saltspray at 35°C, 5% NaCl solution. The grades performed well.

### Examples

The following amines are employed in the examples

**Table 1: Overview of amines explored.**

| **Trade name** | **Chemical name (abbreviation)/ structure** |
|---|---|
| Dytek-A | 1,5-diamino-2-methylpentane |
| - | 1,3-bis(aminomethyl)cyclohexane (1,3-BAC) |
| - | Norbornanediamine (NBDA) |
| **Comparative Amines** | |
| Jeffamine T-403 | 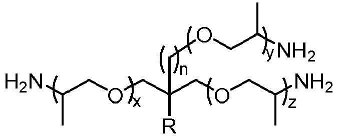 |
| - | Ethylenediamine (EDA) |
| | *N*,*N*-dimethyldipropylenetriamine |
| - | Diethylenetriamine (DETA) |
| Dytek-EP | 1,3-diaminopentane |
| Jeffamine RFD270 | |

The following epoxy resins are used in the examples in adduct formation:
- GE 36 Propoxylated triglycidyl ether, from CVC Thermoset Specialities. Mw 2000, viscosity 200-320 cP, EEW 620 - 680, CAS no. 37237-76-6
- GE 35 Castor oil glycidyl ether, from CVC Thermoset Specialities.
- Glycidyl ether of C₁₂-C₁₄ aliphatic alcohols (Epodil 748 from Air products)
- Diglycidyl ether of bisphenol A (EEW 182 - 192 g/eq) "liquid bisphenol A epoxy resin" (D.E.R 331 from Dow)
- 1,6-hexanediol diglycydyl ether

Adducts are prepared following the general protocol below:

### Example of synthesis without solvent

1,5-diamino-2-methylpentane (160.9 g, 1.38 mol) was heated to 70 °C. While stirring continuously, the epoxy resin GE-36 (450 g, 0.69 mol epoxy groups) was dropwise added over a period of 3.5 h. Upon complete addition of the epoxy resin the reaction mixture was stirred for 1 h at 70 °C before cooling to room temperature and transfer to a suitable container.

### Example of synthesis with solvent

1,5-diamino-2-methylpentane (96.5 g, 0.83 mol) and ethanol (76 mL) were mixed and heated to 70 °C. While continuously stirring, the epoxy resin GE-36 (450 g, 0.69 mol epoxy groups) was dropwise added over a period of 5 h. Upon complete addition of the epoxy resin the reaction mixture was stirred for 1 h at 70 °C before cooling to room temperature and transfer to a suitable container.

The true chemical structure of the amine-epoxy adduct formed is not known. A tentative structure is given below:

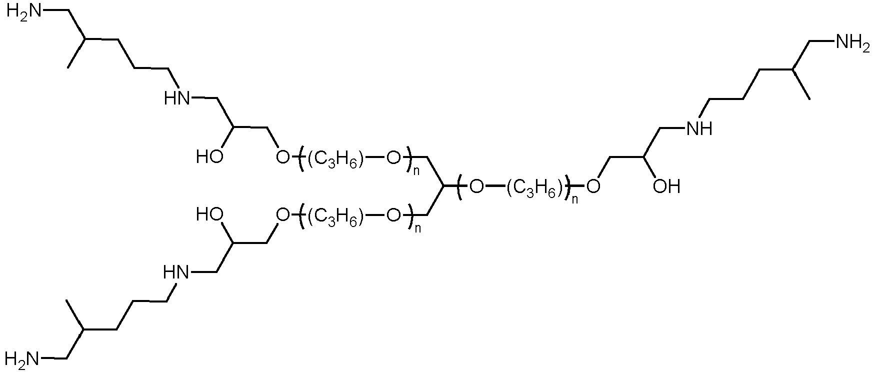

### Scheme 1: Tentative chemical structure of the adduct of GE-36 and 1,5-diamino-2-methylpentane

A series of further adducts are prepared as illustrated in table 2. Usually 2 molar eq. amine are added per mol. epoxy functional group (unless otherwise stated).

### Results

The amine-epoxy adducts were tested as curing agents for Jotamastic 90 Comp A, a bisphenol A epoxy resin based coating and Jotacote Universal N10 Comp A, a bisphenol A epoxy primer. Both Jotamastic 90 Comp A, and Jotacote Universal N10 Comp A are commercially available primers from Jotun A/S containing epoxy, fillers, solvents and additives but no curing agents.

Results were compared with:
(I) results obtained with Jotamastic 90 Comp A cured with Jotamastic 80 Comp B polyamine adduct (JM80), which is a typical amine-epoxy adduct synthesized from bisphenol A based epoxy and low molecular weight polyamines; or
(II) Jotacote Universal N10 Comp A cured with Jotacote Universal N10 Comp B (a polyamine bisphenol A epoxy adduct)

With the exception of adducts synthesized with Jeffamine T-403 and Jeffamine RFD-270, the adducts showed curing times comparable to JM80 Comp B at ambient temperatures (Table 2) when used as curing agents for Jotamastic 90 Comp A.

At lower temperatures four of the adducts have comparable curing times to JM80, while the other ones have a significantly longer curing time. Some also appear tacky after 48 h. The adduct synthesized by mixing in 10wt% liquid bisphenol A epoxy into GE-36 (entry 11 and 12) also gave curing times comparable to those of the standard JM80.

**Table 2: Curing times of Jotamastic 90 with the amine adducts at 23 °C and 5 °C. If not otherwise stated, the adducts are made from the given amine and the GE-36 epoxy resin. The mixing ratio is mass of paint (Jotamastic 90) to mass of curing agent adduct.**

| **#** | **Curing agent formulation / Amine used in adduct** | **Mixing ratio (wt)** | **23°C 50% RH** | | | | |
|---|---|---|---|---|---|---|---|
| | | | **T1** | **T2** | **T3** | | **Nail 24h** |
| **c1** | Reference amine adduct (Jotamastic 80 Comp B) | 100:11.40 | 3 h | 4.75 h | 5 h | | Medium/ Hard |
| c2 | ethylenediamine | 100:12.97 | 3.5 h | 4 h | 5.5 h | | |
| c3 | Diethylenetriamine | 100:14.40 | 3 h | 3.5 h | 4.25 h | | |
| c4 | 1,3-diaminopentane | 100:14.40 | 9.5 h | 12 h | 16.5 h | | Tacky |
| c5 | *N*,*N*-dimethyldipropylenetriamine | 100:22.2 | 2.75 h | 3.75 h | > 24h | | Tacky |
| c6 | Jeffamine T-403 | 100:18.40 | 13.5 h | 16 h | 17 h | | |
| c7 | Jeffamine RFD-270 | 100:19.93 | 10.5 h | 11.5 h | 12.75 h | | |
| | **Inventive Examples** | | | | | | |
| **8** | **1,5-diamino-2-methylpentane** | **100:14.40** | **1.75 h** | **5.25 h** | **5.5 h** | | |
| **9** | **1,3-bis(aminomethyl)cyclohexane** | **100:15.40** | **3.5 h** | **4.25 h** | **7 h** | | |
| **10** | **Norbornanediamine (NBDA)** | **100:16.16** | **3.5 h** | **4h** | **6.25 h** | | |
| **11** | **Adduct of 1,5-diamino-2-methylpentane and GE-36 and 10wt% liquid bis A epoxy resin** | **100:16.86** | **4h** | **4h** | **5 h** | | |
| **12** | **Adduct of NBDA and GE-36 + 10wt% glycidyl ether of C₁₂-C₁₄ aliphatic alcohols** | **100:17.13** | **2.5 h** | **5 h** | **5.5h** | | |
| **13** | **Adduct of NBDA and a mixture of GE-36 and glycidyl ether of C₁₂-C₁₄ aliphatic alcohols (80:20)** | **100:13.50** | **4h** | **5.75 h** | **6.25 h** | | |
| **14** | **Adduct of NBDA and GE-36 and glycidyl ether of C₁₂-C₁₄ aliphatic alcohols (80:20). GE-36 added first, then the glycidyl ether of C₁₂-C₁₄ aliphatic alcohols.** | **100:13.50** | **4.75 h** | **6 h** | **6.25 h** | | |
| CE1 | 1,5-diamino-2-methylpentane adducted with GE-35 (3 eq. amine pr. mol epoxy groups) | 100:10.02 | 2.5 h | 3.5 h | 5 h | | |

**Table 2 cont.**

| | **Curing agent formulation / Amine used in adduct** | **Mixing ratio (wt)** | **5°C 8 5% RH** | | | | |
|---|---|---|---|---|---|---|---|
| | | | **T1** | **T2** | **T3** | | **Nail 24h** |
| c15 | REFERENCE (Jotamastic 80 Comp B) | 100:11.40 | 5 h | 14.5 h | 17 h | | |

| | **Curing agent formulation / Amine used in adduct** | **Mixing ratio (wt)** | **5°C 85% RH** | | | | |
|---|---|---|---|---|---|---|---|
| | | | **T1** | **T2** | **T3** | | **Nail 24h** |
| c16 | Ethylenediamine | 100:12.97 | 11h | 18h | 32h 30min | | Tacky |
| c17 | diethylenetriamine | 100:14.40 | 13 h | 14 h | 15.5 h | | Soft and sweating |
| c18 | 1,3-diaminopentane | 100:14.40 | 27 h | 43 h | ≥48 h | | Tacky |
| c19 | Jeffamine T-403 | 100:18.40 | 37h | ≥48h | ≥48h | | Wet Paint |
| c20 | Jeffamine RFD-270 | 100:19.93 | 26h | 39h | 45h | | Tacky |
| | **Inventive Examples** | | | | | | |
| **21** | **1,5-diamino-2-methylpentane** | **100:14.40** | **12 h** | **16 h** | **20 h** | | |
| **22** | **1,3-bis(aminomethyl)cyclohexane** | **100:15.40** | **12h** | **16h** | **19h** | | |
| **23** | **Norbornanediamine (NBDA)** | **100:16.16** | **11h** | **16h** | **18h** | | |
| **24** | **Adduct of 1,5-diamino-2-methylpentane and a mixture of GE-36 and 10wt% liquid bis A epoxy resin** | **100:16.86** | **11h** | **14h 30min** | **19h** | | |
| **25** | **Adduct of NBDA and a mixture of GE-36 + 10wt% glycidyl ether of C₁₂-C₁₄ aliphatic alcohols** | **100:17.13** | **13h** | **21h** | **22h** | | |
| **26** | **Adduct of NBDA and a mixture of GE-36 and glycidyl ether of C₁₂-C₁₄ aliphatic alcohols (80:20)** | **100:13.50** | **-** | **>24h** | **-** | | **-** |
| **27** | **Adduct of NBDA and GE-36 and glycidyl ether of C₁₂-C₁₄ aliphatic alcohols (80:20). GE-36 added first, then the glycidyl ether of C₁₂-C₁₄ aliphatic alcohols.** | **100:13.50** | **-** | **>24h** | **-** | | **-** |
| CE2 5 °C | 1,5-diamino-2-methylpentane adducted with GE-35 (3 eq. amine pr. mol epoxy groups) | 100:10.02 | 13 h | 21 h | 43 h | | Tacky |

Curing at 5°C differentiates the amines of the invention from the comparative amines. Comparative examples perform poorly. Ethylenediamine cures slowly at low temperature and is tacky, Diethylenetriamine sweats at low temperature curing, 1,3-diaminopentane, Jeffamine T-403 and Jeffamine RFD-270 all cures slowly, especially at low temperature. The adduct of 1,5-diamino-2-methylpentane adducted with GE-35 cures slowly at T3.

The impact resistances of the amine-epoxy adducts were compared with that of standard polyamine adduct cured Jotamastic 80 component B in table 3 below. Clearly, the direct impact resistance was significantly improved when the paint was cured with the amine adducts of GE-36. Also, the reverse impact was improved. The adduct of GE-36 and 1,5-diamino-2-methylpentane (Ex 28 and 31) gave an impact result of 30 inch-pounds, better than the standard curing agent JM80. Impact resistance is tested by letting an indenter fall onto the coated panels and is evaluated on a pass/fail basis. Failures are determined by using a low voltage pinhole detector to identify cracks in the paint film. Mixing ratios in table 3 and 4 between the Jotamastic 90 Component A and the curing agents are the same as in Table 2 above.

**Table 3: Impact results of Jotamastic 90 cured with the amine-epoxy adducts cured 7 d at r.t. and 7 d at 60 °C. Mixing ratios as defined in table 2.**

| | **Curing agent formulation / Amine used in adduct** | **DFT [µm]** | **Max. height failure without [inch]** | |
|---|---|---|---|---|
| | | | **Direct** | **Reverse** |
| CE3 | REFERENCE (Jotamastic 80 Comp B)) | 130 | 18 | 2 |
| | **Inventive Examples** | | | |
| **28** | **1,5-diamino-2-methylpentane** | **105** | **33** | **11** |
| **29** | **1,3-bis(aminomethyl)cyclohexane** | **115** | **26** | **6** |
| **30** | **Norbornanediamine (NBDA)** | **110** | **27** | **10** |
| **31** | **Adduct of 1,5-diamino-2-methylpentane and a mixture of GE-36 and 10wt% liquid bis A epoxy resin** | **110** | **29** | **10** |
| **32** | **Adduct of NBDA and GE-36 and glycidyl ether of C₁₂-C₁₄ aliphatic alcohols (80:20). GE-36 added first, then the glycidyl ether of C₁₂-C₁₄ aliphatic alcohols.** | **112** | **18** | **1** |

**Table 4: Impact results of Jotamastic 90 cured with the amine-epoxy adducts cured 10 d at r.t., 4 d at 60 °C and 1 d at r.t Mixing ratios as defined in table 2.**

| | **Curing agent formulation / Amine used in adduct** | **DFT [µm]** | **Max. he fail ight without ure [inch]** | |
|---|---|---|---|---|
| | | | **Direct** | **Reverse** |
| CE4 | REFERENCE (Jotamastic 80 Comp B)) | 160 | 11,5 | 0,5 |
| | **Inventive Examples** | | | |
| **33** | **1,5-diamino-2-methylpentane** | **160** | **21** | **2** |
| c34 | 1,5-diamino-2-methylpentane and GE-35 | 125 | 15 | 2.5 |
| **35** | **Adduct of NBDA and a mixture of GE-36 + 10wt% glycidyl ether of C12-C14 aliphatic alcohols** | **99** | **21** | **3** |
| **36** | **Adduct of NBDA and a mixture of GE-36 and glycidyl ether of C12-C14 aliphatic alcohols (80:20)** | **119** | **21** | **2** |

All the curing agents show better impact values than the reference. Adducts based on GE-36 are better than the adduct of example c34.

Further impact testing was conducted on adducts made with 1,5-diamino-2-methylpentane or 1,3-bis(aminomethyl)cyclohexane with and without added ethanol. Testing was conducted in two different epoxy coatings, Jotacote Universal N10 (Table 5) and Jotamastic 90 (Table 6). Unless otherwise noted, the adducts where synthesized with 2 mol eq diamine relative to mol epoxy groups.

**Table 5 Impact (Elecometer) properties of Jotacote Universal N10 (comp A) cured with flexible curing agents. Cure 7 d at r.t. and 7 d at 60 °C. The mixing ratio is mass of paint (Jotacote Universal N10) to mass of curing agent adduct.**

| | **Curing agent formulation / amine used adduct** | **EtOH added during synthesis of adduct [wt%]** | **Mixing ratio (wt)** | **DFT [µm]** | **Max. heig without f [cm] ht ailure** | |
|---|---|---|---|---|---|---|
| | | | | | **Direct** | **Reverse** |
| C37 | Reference amine adduct (Jotacote Universal N10 comp. B) | - | 100:21.3 | 162 | 18 | 0 |
| | **Inventive Examples** | | | | | |
| **38** | **1,5-diamino-2-methylpentane** | **-** | **100:15.0** | **191** | **29** | **2** |
| **39** | **1,5-diamino-2-methylpentane** | **9** | **100:16.3** | **216** | **29** | **1** |
| **40** | **1,3-bis(aminomethyl) cyclohexane** | **9** | **100:17.4** | **211** | **30** | **2** |
| **41** | **Adduct of 1,5-diamino-2-methylpentane and a mixture of GE-36 and liquid bis A epoxy resin (90:10)** | **10** | **100:18.9** | **195** | **29** | **2** |
| **42** | **1,5-diamino-2-methylpentane 1.2 eq** | **-** | **100:21.1** | **196** | **39** | **4** |

This table shows again that all the amine adducts containing epoxy of the invention and amine of the invention are better than the "normal" amine epoxy adducts (with bis A epoxy). Further if you compare #42 with #38, it is clear that amine adducts made with a lower amounts amine (1.2 vs 2 eq) give better impact properties.

Regarding the solvent added during the synthesis. The results show that addition of ethanol during the synthesis does not influence the impact properties.

**Table 6 Impact (Elecometer) properties for Jotamastic 90 cured flexible curing agents. Cure 7 d at r.t. and 7 d at 60 °C. The mixing ratio is mass of paint (Jotamastic 90) to mass of curing agent adduct.**

| | **Curing agent formulation / amine used adduct** | **EtOH added during synthesis of adduct (wt%)** | **Mixing ratio (wt)** | **DFT [µm]** | **Max. height failure without [cm]** | |
|---|---|---|---|---|---|---|
| | | | | | **Direct** | **Reverse** |
| c43 | Reference amine adduct (JM80 comp. B) | | 100:11.4 | 155 | 22 | 0 |
| | **Inventive Examples** | | | | | |
| **44** | **1,5-diamino-2-methylpentane** | | **100:14.4** | **160** | **29** | **2** |
| **45** | **1,5-diamino-2-methylpentane** | **9** | **100:15.7** | **182** | **29** | **2** |
| **46** | **1,3-bis(aminomethyl) cyclohexane** | **9** | **100:16.7** | **181** | **29** | **2** |
| **47** | **Adduct of 1,5-diamino-2-methylpentane and a mixture of GE-36 and liquid bis A epoxy resin (90:10)** | **10** | **100:18.7** | **170** | **32** | **2** |
| **48** | **1,5-diamino-2-methylpentane 1.2 eq** | | **100:20.2** | **149** | **53** | **20** |

The results show that the impact properties are maintained when they contain ethanol. Ethanol is expected to improve the storage stability of the composition.

In Table 7 and 8 the test results relative to Jotacote Universal N10 and Jotamastic 90 are presented.

**Table 7 Fixed radii mandrel Jotacote Universal N10 (NACE RP0394-2002 Appendix H), curing conditions 7 d at r.t. + 1 week at 60 °C. Mixing ratios as in Table 5.**

| **#** | **Curing agent formulation / amine used in adduct** | **EtOH added during synthesis of adduct (wt%)** | **DFT [mm]** | **Max.radius with cracks [mm]** | **Min. radius without cracks [mm]** |
|---|---|---|---|---|---|
| c49 | Jotacote Universal N10 comp. B Reference | - | 0,19 | 130 | 150 |

| | **# Curning agent formulation / amine used in adduct** | **EtOH added DFT synthesis of adduct (wt%)** | **during [mm] with cracks** | **Max.radius [mm]** | **without cracks [mm]** |
|---|---|---|---|---|---|
| | **Inventive Examples** | | | | |
| **50** | **1,5-diamino-2-methylpentane** | **-** | **0,2** | **-** | **64** |
| **51** | **1,5-diamino-2-methylpentane** | **9** | **0,22** | **-** | **64** |
| **52** | **1,3-bis(aminomethyl) cyclohexane** | **9** | **0,27** | **-** | **64** |
| **53** | **Adduct of 1,5-diamino-2-methylpentane and a mixture of GE-36 and liquid bis A epoxy resin (90:10)** | **10** | **0,21** | **-** | **64** |
| **54** | **1,5-diamino-2-methylpentane 1.2 eq** | **-** | **0,21** | **-** | **64** |

**Table 8 Fixed radii mandrel Jotamastic 90 (NACE RP0394-2002 Appendix H), curing conditions 1 week at r.t. + 7 d at 60 °C. Mixing ratios as in Table 6.**

| # | **Curing agent formultaion / amine used in adduct** | **EtOH added during synthesis of adduct (wt%)** | **DFT [mm]** | **Max.radius with cracks [mm]** | **Min. radius without cracks [mm]** |
|---|---|---|---|---|---|
| c55 | Reference amine adduct (JM80 comp. B) | - | 0,11 | 115 | 130 |
| | **Inventive Examples** | | | | |
| **56** | **1,5-diamino-2-methylpentane** | **-** | **0,15** | **-** | **64** |
| **57** | **1,5-diamino-2-methylpentane** | **9** | **0,16** | **-** | **64** |
| **58** | **1,3-bis(aminomethyl) cyclohexane** | **9** | **0,19** | **-** | **64** |
| **59** | **Adduct of 1,5-diamino-2-methylpentane and a mixture of GE-36 and liquid bis A epoxy resin (90:10)** | **10** | **0,17** | **-** | **64** |
| **60** | **1,5-diamino-2-methylpentane 1.2 eq** | **-** | **0,21** | **-** | **64** |

The Fixed Radii Mandrel results demonstrate the superior flexibility of the coatings cured with the new flexible hardener compared to the current standard product, Jotamastic 90 (Reference). The smaller the "Min radius without cracks" value is, the more severe the coated film is bent.

**Table 9 Results obtained with 1,6-hexanediol diglycidyl ether based adducts. Beck Koller curing time at ambient temperature (ca. 22 °C). All results obtained with a liquid bisphenol A epoxy, EEW 190 g/eq. The mixing ratio is mass of liquid bisphenol A epoxy to mass of curing agent adduct.**

| | **Curing agent formulation / amine used in adduct** | **Mixing ratio (wt)** | **T1 [h]** | **T2 [h]** | **T3 [h]** | **T4 [h]** | **Max he withou [inch] ight t failure** | |
|---|---|---|---|---|---|---|---|---|
| | | | | | | | **Direct** | **Reverse** |
| C61 | Jotamastic 80 comp. B | 100:52.6 | 2.25 | 3.5 | 4 | 4.5 | 27 | 2 |
| C62 | adduct of 1,6-hexanediol diglycidyl ether and 1,5-diamino-2-methylpentane^{∗} | 100:73.6 | 1.75 | 2.5 | 2.75 | >24 | 18 | - |
| **63** | **adduct of Erisys GE-36 and 1,5-diamino-2-methylpentane^{∗∗}** | **100:214** | **6.75** | **7.75** | **7.75** | **10.5** | **80** | **80** |

| | | | | | | | | |
|---|---|---|---|---|---|---|---|---|
| ^{∗} (1.6 eq amine pr epoxy group) ^{∗∗} (1.5 eq amine pr epoxy group) | | | | | | | | |

Curing times and impact testing were conducted in clears. Liquid bis A epoxy EEW 190 g/eq was used as component A. Impact results were achieved on clears with liquid epoxy EEW 190 g/eq after curing 2 weeks at ambient temperature. Coatings were applied with applicator 300 µm gap (300 µm wet film thickness, giving roughly 180 µm in dry film thickness (DFT).

This data shows the value of GE-36 based adduct over a diol based adduct. In addition to being tacky, the cured films made with diglycidyl ether based curing adduct (C62) were swelling and partly dissolving when exposed to water. In C62, 1,6-hexanediol diglycidyl ether was used to make amine adducts.

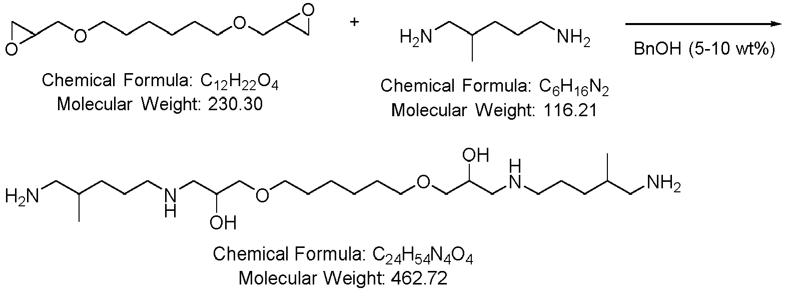

The adduct of example C62 is made with 1.6 equivalents of amine pr epoxy group and 5.3 wt% benzyl alcohol. Example 63 uses GE-36. It is made with 1.5 equivalents of amine pr epoxy group and 6 wt% benzyl alcohol. The diglycidyl ether based adduct has weaker impact results as compared with GE-36 based adduct. In addition the cured films made with diglycidyl ether based curing agent were tacky and swollen and partly dissolved when exposed to water. Due to the poor tolerance against water, diglycidyl ether based curing agents are not suitable for our use in anticorrosive coatings.

## Claims

1. A curing agent comprising the reaction product of (I) an aliphatic polyglycidyl ether of a triol or higher polyol; with a diamine (II);
wherein said diamine (II) comprises a first primary or secondary amine group, and a second primary or secondary amine group, linked together by a linker;
wherein said linker is an aliphatic hydrocarbyl group containing 4-20 carbon atoms and optionally containing 1 to 3 oxygen atoms wherein the N atoms of the first and second amine groups are separated by at least 4 atoms; and
wherein the hydroxyl groups of said triol or higher polyol residue form ethers in said aliphatic polyglycidyl ether component (I).

2. A curing agent according to claim 1 wherein said first and second amines are primary.

3. A curing agent according to any preceding claim wherein said amine is of formula (III)
NH₂-L-NHR₂ (III)
wherein R₂ is a H or C1-C6 hydrocarbyl group, preferably C1-3 alkyl group, especially methyl or H;
and L is an aliphatic C4-C20 hydrocarbyl unit which optionally contains 1 to 3 -O- groups.

4. A curing agent according to any preceding claim wherein said linker between the two amine groups is an aliphatic C4-C15 hydrocarbyl group, such as a linear, branched or cyclic C4-C8 alkyl group.

5. A curing agent according to any preceding claim wherein said amine (II) is selected from the group consisting of:
1,6-hexane diamine
2-methyl-1,5-pentane-diamine
1,2-bis(2-aminoethoxy)ethane);
2,2,4-trimethyl hexamethylene diamine (TMD);
isophorone diamine;
1,3-bis(aminomethyl)-cyclohexane (1,3-BAC);
1,4-bis(aminomethyl)-cyclohexane (1,4-BAC)
norbornanediamine (NBDA);
triethylene glycol diamine;
or mixtures thereof.

6. A curing agent according to any preceding claim where said amine comprises, consists essentially of, or consists of 2-methyl-1,5-pentane-diamine or 1,3 -bis(aminomethyl)-cyclohexane.

7. A curing agent according to any preceding claim wherein the molar ratio of (NH₂ and NH units in the amine(s) (II)) : (epoxide units in the epoxy (I)) is ≥1:1, preferably ≥1.2:1, such as ≥1.5:1.

8. A curing agent according to any preceding claim wherein the aliphatic polyglycidyl ether component (I) is of formula (X): 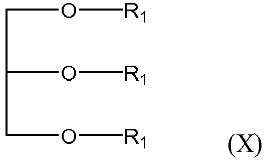 wherein each R₁ is an optionally unsaturated alkyl group which is optionally interrupted by one or more -O- groups, wherein at least two R₁ groups also carry a glycidyl ether functionality; preferably wherein each R₁ is a polyethylene glycol chain or polypropylene glycol chain functionalised to carry a glycidyl ether.

9. A curing agent according to any preceding claim wherein said aliphatic polyglycidyl ether is a triglycidyl ether of propoxylated glycerin.

10. A curing agent according to any preceding claim wherein reactant (I) further comprises an epoxide of formula (V) is 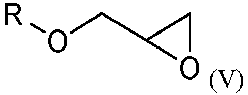 wherein R is a saturated or unsaturated C6-C30 hydrocarbyl group, preferably a C8-C24 aliphatic hydrocarbyl group, especially a C10-C20 aliphatic hydrocarbyl or C10-C18 aliphatic hydrocarbyl group, C10-C16 aliphatic group, especially a C12-C14 aliphatic group which may contain one or more ether linkages.

11. A curing agent according to any preceding claim wherein reactant (I) further comprises up to 20 wt% a liquid bisphenol epoxy resin.

12. A curing agent according to any preceding claim wherein the aliphatic polyglycidyl ether of a triol or higher polyol is free of carboxyl groups.

13. A method for preparing a curing agent comprising a step of reacting (I) an aliphatic polyglycidyl ether of a triol, such as glycerine, or higher polyol with a diamine (II);
wherein said diamine (II) comprises a first primary or secondary amine group, and a second primary or secondary amine group, linked together by a linker;
wherein said linker is an aliphatic hydrocarbyl group containing 4-20 carbon atoms and optionally containing 1 to 3 oxygen atoms wherein the N atoms of the first and second amine groups are separated by at least 4 atoms; and
wherein the hydroxyl groups of said triol or higher polyol residue form ethers in said aliphatic polyglycidyl ether component (I).

14. A kit of parts comprising:
(i) a first part comprising curing agent as claimed in claim 1 to 12; and
(ii) a second part comprising an epoxy resin.

15. A process of curing an epoxy resin comprising the steps of combining an epoxy resin with a curing agent as claimed in claim 1 to 12 and allowing the combination to cure.

16. A cured epoxy resin obtainable by the process as claimed in claim 15.

17. A coating composition comprising a curing agent as claimed in any one of claims 1 to 12 and an epoxy resin and optionally one or more acrylates.

## Patentansprüche

1. Härtemittel, das das Reaktionsprodukt von (I) einem aliphatischen Polyglycidylether aus einem Triol oder höheren Polyol umfasst; mit einem Diamin (II);
wobei das Diamin (II) eine erste primäre oder sekundäre Amingruppe und eine zweite primäre oder sekundäre Amingruppe durch einen Linker miteinander verbunden umfasst;
wobei der Linker eine aliphatische Hydrocarbylgruppe ist, die 4-20 Kohlenstoffatome enthält und optional 1 bis 3 Sauerstoffatome enthält, wobei die N Atome der ersten und der zweiten Amingruppe durch mindestens 4 Atome getrennt sind; und
wobei die Hydroxylgruppe des Triols oder höheren Polyol-Rests Ether in der aliphatischen Polyglycidyletherkomponente (I) bilden.

2. Härtemittel nach Anspruch 1, wobei das erste und zweite Amin primär sind.

3. Härtemittel nach einem vorstehenden Anspruch, wobei das Amin von Formel (III) ist,
NH₂-L-NHR₂ (III)
wobei R₂ ein H oder eine C1-C6 Hydrocarbylgruppe ist, bevorzugt C1-3 Alkylgruppe, insbesondere Methyl oder H;
und L eine aliphatische C4-C20 Hydrocarbyleinheit ist, die optional 1 bis 3 - O- Gruppen enthält.

4. Härtemittel nach einem vorstehenden Anspruch, wobei der Linker zwischen den zwei Amingruppen eine aliphatische C4-C15 Hydrocarbylgruppe ist, wie eine lineare, verzweigte oder zyklische C4-C8 Alkylgruppe.

5. Härtemittel nach einem vorstehenden Anspruch, wobei das Amin (II) aus der Gruppe ausgewählt ist, bestehend aus:
1,6-Hexandiamin
2-Methyl-1,5-pentan-diamin
1,2-Bis(2-aminoethoxy)ethan);
2,2,4-Trimethylhexamethylendiamin (TMD);
Isophorondiamin;
1.3-Bis(aminomethyl)-cyclohexan (1,3-BAC);
1.4-Bis(Aminomethyl)-cyclohexan (1,4-BAC)
Norbornandiamin (NBDA);
Triethylenglycoldiamin;
oder Gemische davon.

6. Härtemittel nach einem vorstehenden Anspruch, wobei das Amin 2-Methyl-1,5-pentan-diamin oder 1,3-Bis(aminomethyl)-cyclohexan umfasst, im Wesentlichen daraus besteht oder daraus besteht.

7. Härtemittel nach einem vorstehenden Anspruch, wobei das Molverhältnis von (NH₂- und NH-Einheiten in dem/den Amin(en) (II)) : (Epoxideinheiten in dem Epoxy (I)) ≥1:1 ist, bevorzugt ≥1,2:1, wie etwa ≥1,5:1.

8. Härtemittel nach einem vorstehenden Anspruch, wobei die aliphatische Polyglycidyletherkomponente (I) von Formel (X) ist: 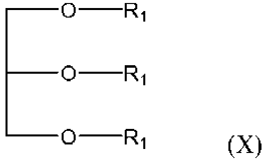 wobei jedes R₁ eine optional ungesättigte Alkylgruppe ist, die optional durch eine oder mehrere -O- Gruppen unterbrochen ist, wobei mindestens zwei R₁ Gruppen auch eine Glycidylether-Funktionalität tragen; bevorzugt wobei jedes R₁ eine Polyethylenglycolkette oder Polypropylenglycolkette ist, die funktionalisiert ist, einen Glycidylether zu tragen.

9. Härtemittel nach einem vorstehenden Anspruch, wobei der aliphatische Polyglycidylether ein Triglycidylether von propoxyliertem Glycerin ist.

10. Härtemittel nach einem vorstehenden Anspruch, wobei Reaktionsmittel (I) weiter ein Epoxid von Formel (V) umfasst, die Folgende ist 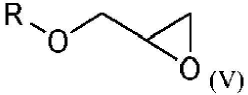 wobei R eine gesättigte oder ungesättigte C6-C30 Hydrocarbylgruppe ist, bevorzugt eine C8-C24 aliphatische Hydrocarbylgruppe, insbesondere eine C10-C20 aliphatische Hydrocarbyl- oder C10-C18 aliphatische Hydrocarbylgruppe, C10-C16 aliphatische Gruppe, insbesondere eine C12-C14 aliphatische Gruppe, die ein oder mehr Etherbindungen enthalten kann.

11. Härtemittel nach einem vorstehenden Anspruch, wobei Reaktionsmittel (I) weiter bis zu 20 Gew.-% eines flüssigen Bisphenolepoxyharzes umfasst.

12. Härtemittel nach einem vorstehenden Anspruch, wobei der aliphatische Polyglycidylether eines Triols oder höheren Polyols frei von Carboxylgruppen ist.

13. Verfahren zum Zubereiten eines Härtemittels, umfassend einen Schritt zum Reagieren (I) eines aliphatischen Polyglycidylethers eines Triols, wie etwa Glycerin, oder höheren Polyols mit einem Diamin (II);
wobei das Diamin (II) eine erste primäre oder sekundäre Amingruppe und eine zweite primäre oder sekundäre Amingruppe durch einen Linker miteinander verbunden umfasst;
wobei der Linker eine aliphatische Hydrocarbylgruppe ist, die 4-20 Kohlenstoffatome enthält und optional 1 bis 3 Sauerstoffatome enthält, wobei die N Atome der ersten und der zweiten Gruppe durch mindestens 4 Atome getrennt sind; und
wobei die Hydroxylgruppe des Triols oder höheren Polyol-Rests Ether in der aliphatischen Polyglycidyletherkomponente (I) bilden.

14. Kit aus Teilen, umfassend:
(i) einen ersten Teil, der Härtemittel nach Anspruch 1 bis 12 umfasst; und
(ii) einen zweiten Teil, der ein Epoxyharz umfasst.

15. Prozess zum Härten eines Epoxyharzes, umfassend die Schritte zum Kombinieren eines Epoxyharzes mit einem Härtemittel nach Anspruch 1 bis 12 und Gestatten der Kombination, zu härten.

16. Gehärtetes Epoxyharz, das durch den Prozess nach Anspruch 15 erhalten wird.

17. Beschichtungszusammensetzung, umfassend ein Härtemittel nach einem der Ansprüche 1 bis 12 und ein Epoxyharz und optional ein oder mehrere Acrylate.

## Revendications

1. Agent de durcissement comprenant le produit de réaction (I) d'un éther polyglycidylique aliphatique d'un triol ou d'un polyol supérieur ; avec une diamine (II) ;
dans lequel ladite diamine (II) comprend un premier groupe amine primaire ou secondaire et un second groupe amine primaire ou secondaire, liés ensemble par un lieur ;
dans lequel ledit lieur est un groupe hydrocarbyle aliphatique contenant 4-20 atomes de carbone et, facultativement, contenant 1 à 3 atomes d'oxygène, dans lequel les N atomes des premier et second groupes amine sont séparés par au moins 4 atomes ; et
dans lequel les groupes hydroxyles dudit résidu de triol ou de polyol supérieur forment des éthers dans ledit composant d'éther polyglycidylique aliphatique (I).

2. Agent de durcissement selon la revendication 1, dans lequel lesdites première et seconde amines sont primaires.

3. Agent de durcissement selon une quelconque revendication précédente, dans lequel ladite amine est de formule (III)
NH₂-L-NHR₂ (III)
dans lequel R₂ est un H ou un groupe hydrocarbyle en C1-C6, de préférence un groupe alkyle en C1-3, spécialement du méthyle ou H ;
et L est une unité hydrocarbyle aliphatique en C4-C20 qui, facultativement, contient 1 à 3 groupes -O-.

4. Agent de durcissement selon une quelconque revendication précédente, dans lequel ledit lieur entre les deux groupes amine est un groupe hydrocarbyle aliphatique en C4-C15, tel qu'un groupe alkyle linéaire, ramifié ou cyclique en C4-C8.

5. Agent de durcissement selon une quelconque revendication précédente, dans lequel ladite amine (II) est sélectionnée dans le groupe constitué par :
la 1,6-hexanediamine
la 2-méthyl-1,5-pentane-diamine
le 1,2-bis(2-aminoéthoxy)éthane) ;
la 2,2,4-triméthyl hexaméthylène diamine (TMD);
l'isophorondiamine ;
le 1,3-bis(aminométhyl)-cyclohexane (1,3-BAC) ;
la 1,4-bis(aminométhyl)-cyclohexane (1,4-BAC)
norbornanediamine (NBDA) ;
la triéthylèneglycol diamine ;
ou des mélanges de ceux-ci.

6. Agent de durcissement selon une quelconque revendication précédente, dans lequel ladite amine comprend, se compose essentiellement, ou se compose de la 2-méthyl-l,5-pentane-diamine ou du 1,3-bis(aminométhyl)-cyclohexane.

7. Agent de durcissement selon une quelconque revendication précédente, dans lequel le rapport molaire des (unités NH₂ et NH dans la ou les amines (II)) : (les unités époxydes dans l'époxy (I)) est ≥1:1, de préférence ≥1,2:1, tel que ≥1,5:1.

8. Agent de durcissement selon une quelconque revendication précédente, dans lequel le composant d'éther polyglycidylique aliphatique (I) est de formule (X) : 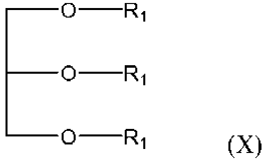 dans lequel R₁ est un groupe alkyle facultativement insaturé qui est facultativement interrompu par un ou plusieurs groupes -O-, dans lequel au moins deux groupes R₁ comportent également une fonctionnalité d'éther glycidylique ; de préférence dans lequel chaque R₁ est une chaîne de polyéthylène glycol ou une chaîne de polypropylène glycol fonctionnalisée pour comporter un éther glycidylique.

9. Agent de durcissement selon une quelconque revendication précédente, dans lequel ledit éther polyglycidylique aliphatique est un éther triglycidylique de glycérine propoxylatée.

10. Agent de durcissement selon une quelconque revendication précédente, dans lequel un réactif (I) comprend en outre un époxyde de formule (V) 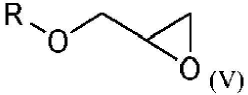 dans lequel R est un groupe hydrocarbyle saturé ou insaturé en C6-C30, de préférence un groupe hydrocarbyle aliphatique en C8-C24, spécialement un groupe hydrocarbyle aliphatique en C10-C20 ou un groupe hydrocarbyle aliphatique en C10-C18, un groupe aliphatique en C10-C16, spécialement un groupe aliphatique en C12-C14 qui peut conteni une ou plusieurs liaisons éther.

11. Agent de durcissement selon une quelconque revendication précédente, dans lequel un réactif (I) comprend en outre jusqu'à 20 % en poids d'une résine époxy bisphénol liquide.

12. Agent de durcissement selon une quelconque revendication précédente, dans lequel l'éther polyglycidylique aliphatique d'un triol ou d'un polyol supérieur est dépourvu de groupes carboxyles.

13. Procédé pour préparer un agent de durcissement comprenant une étape de réaction (I) d'un éther polyglycidylique aliphatique d'un triol, tel que la glycérine, ou d'un polyol supérieur avec une diamine (II) ;
dans lequel ladite diamine (II) comprend un premier groupe amine primaire ou secondaire et un second groupe amine primaire ou secondaire, liés ensemble par un lieur ;
dans lequel ledit lieur est un groupe hydrocarbyle aliphatique contenant 4-20 atomes de carbone et, facultativement, contenant 1 à 3 atomes d'oxygène, dans lequel les N atomes des premier et second groupes amine sont séparés par au moins 4 atomes ; et
dans lequel les groupes hydroxyles dudit résidu de triol ou de polyol supérieur forment des éthers dans ledit composant d'éther polyglycidylique aliphatique (I).

14. Kit de pièces comprenant :
(i) une première pièce comprenant un agent de durcissement tel que revendiqué dans la revendication 1 à 12 ; et
(ii) une seconde pièce comprenant une résine époxy.

15. Processus de durcissement d'une résine époxy comprenant les étapes de combinaison d'une résine époxy avec un agent de durcissement tel que revendiqué dans la revendication 1 à 12 et permettant le durcissement de la combinaison.

16. Résine époxy durcie pouvant être obtenue par le processus tel que revendiqué dans la revendication 15.

17. Composition de revêtement comprenant un agent de durcissement tel que revendiqué dans l'une quelconque des revendications 1 à 12 et une résine époxy et, facultativement un ou plusieurs acrylates.
